Europäisches Patentamt

European Patent Office

Office européen des brevets

(11) Publication number: **0 163 335**
**B1**

(12) **EUROPEAN PATENT SPECIFICATION**

(45) Date of publication of patent specification: **22.06.88**

(21) Application number: **85200649.3**

(22) Date of filing: **05.11.82**

(60) Publication number of the earlier application in accordance with Art. 76 EPC: **0 079 736**

(51) Int. Cl.⁴: **F 02 C 3/20, F 02 C 3/30, F 01 K 25/00, F 01 K 21/04, F 23 R 3/06**

(54) Hydrogen fueled gas turbine engine.

(30) Priority: **03.02.82 JP 14820/82**

(43) Date of publication of application:
**04.12.85 Bulletin 85/49**

(45) Publication of the grant of the patent:
**22.06.88 Bulletin 88/25**

(84) Designated Contracting States:
**AT BE CH DE FR GB IT LI LU NL SE**

(56) References cited:
**DE-A-2 933 932**
**FR-A-2 259 987**
**FR-A-2 336 554**
**FR-A-2 439 362**
**GB-A-1 524 259**
**US-A-2 995 895**
**US-A-3 101 592**

(73) Proprietor: **Watanabe, Kenji**
**4-14-14 Murasaki**
**Kagoshima-shi Kagoshima-Ken 890 (JP)**
(73) Proprietor: **Baba, Katsuji**
**15-1, Terukunicho**
**Kagoshima-shi Kagoshima Pref. (JP)**

(72) Inventor: **Watanabe, Kenji**
**4-14-14 Murasakibaru**
**Kagoshima-shi Kagoshima-ken 890 (JP)**

(74) Representative: **Ben-Nathan, Laurence Albert et al**
**Urquhart-Dykes & Lord 91 Wimpole Street London W1M 8AH (GB)**

Courier Press, Leamington Spa, England.

## Description

The present invention relates to gas turbine engines and more particularly, to a hydrogen fueled gas turbine engine wherein water sprays jetted into a combustion chamber are instantly vaporized to steam by igniting hydrogen gas, thereby utilizing the combustion energy of the hydrogen gas and the steam energy generated from the vaporization of the water sprays in combination to obtain mechanical dynamic energy.

When hydrogen gas is viewed as a fuel for obtaining mechanical dynamic energy, its combustion rate is far greater than that of gasoline, and as a result the conversion of its combustion energy into mechanical dynamic energy becomes very low. The unconverted thermal energy which remains in the combustion chamber becomes accumulated and causes abnormal temperature rises in the parts constituting the combustion chamber and adjacent parts thereof. This in turn hampers a smooth supply of hydrogen gas into the combustion chamber and the timely ignition thereof as is required, so that proper engine driving becomes impossible.

A wide variety of hydrogen fueled gas turbine engines have hitherto been proposed as a possible replacement for petrol fueled gas turbine engines, primarily for the benefit of less formation of nitrogen oxides ($NO_x$) and less fuel expenditure. See, for example, U.S. Patent No. 3,101,592 issued on August 27, 1963 to Anthony E. Robertson et al., wherein a hydrogen gas jet nozzle and a water spray jet nozzle are provided to jet hydrogen gas and water sprays directly into a combustion chamber to generate superheated steam which is passed for use in driving a heat engine. GB Patent No. 1,524,259 also discloses feeding water directly into a combustion chamber which in this case is fed with kerosine or methane gas as the fuel. In this arrangement, however, the injection pressure of the fuel gas is likely to disturb effective jetting-in of the water sprays in the combustion chamber. Water sprays are merely introduced into the combustion chamber, and they generate either an undesirable stratified temperature profile of the combustion discharge gases, or inefficient vaporization of water sprays.

In order to obviate the problems of the prior art as mentioned above, a means of mixing the combustion gas in the combustion chamber and the water sprays supplied thereto is known from US Patent No. 2,995,895. However, according to this means, the water sprays and combustion gas are mixed by guiding the same toward the center from the outer periphery of the swirl guide in order to prevent the high temperature combustion gas from damaging the turbine blades, and the mixture is then passed through the swirl guide and discharged in a stream of a far thinner range than the inner diameter of the combustion chamber. Therefore, this means cannot generate the water spray with sufficient steam energy to obtain mechanical dynamic energy by diffusing the water spray into an extensive area of the combustion gas.

The present invention as claimed herein is intended to eliminate the foregoing drawback and has for its object to provide a hydrogen fueled gas turbine engine which enables sufficient conversion of the combustion energy of hydrogen gas into mechanical dynamic energy in combination with the steam energy generated from the vaporization of water sprays.

GB—A—1,524,259 discloses a gas turbine engine having the features of the preamble of Claim 1. The invention provides a hydrogen fueled gas turbine engine having the features of the characterizing clause of Claim 1.

With this arrangement, hydrogen gas and water sprays are independently introduced into the combustion zone and the mixing zone. Accordingly, the introduction of the water sprays from the water spray jet nozzle is not disturbed by spray pressure of the hydrogen gas.

Also, according to the present invention, a multiplicity of deflector guide fins are respectively provided at the inner peripheral surfaces of the inner housing and the semi-spherical member.

The aforesaid respective deflector guide fins are provided in the respective apertures radially provided on the surface of the semi-spherical wall member and the inner housing head. One end of these guide fins at the respective apertures is separated and bent inwardly of the apertures so that the fluid passing through respective apertures abuts respective guide fins and is directed toward the circumferential direction of the combustion chamber. With this arrangement, compressed air is admitted in a spiral fashion into the combustion zone, thereby increasing the substantial combustion area of the hydrogen gas in the combustion zone and increasing its inflammability. Combustion gas abuts said deflector guide fins, flows into the mixing zone, and then further flows to the rear thereof along the inner peripheral surface of the semi-spherical member to become a spiral flow. At the same time the flow takes in a spiral fashion the water sprays jetted toward the center of the mixing zone and efficiently disperses the water sprays into an extensive area inside the mixing zone, producing sufficient steam energy.

These and other objects and advantages of the invention will be more apparent from the following detailed description taken in conjunction with the accompanying drawings, in which:

Figure 1 is a sectional view of a hydrogen fueled gas turbine engine according to one embodiment of the invention;

Figure 2 is a front view showing an inner housing; and,

Figure 3 is a sectional view taken along the line III—III of Figure 1.

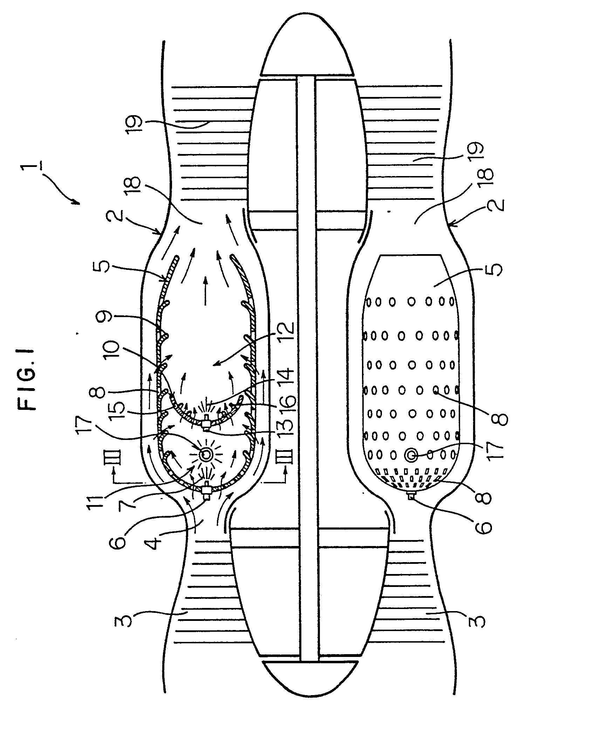

Referring now to the drawings, particularly to Figure 1, there is shown a hydrogen fueled gas turbine engine 1 including an outer housing 2 into which compressed air compressed by an air compressor 3 is introduced via an inlet port 4.

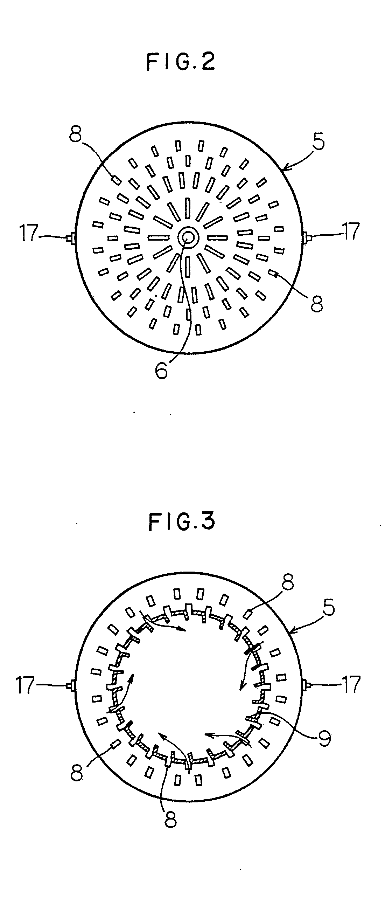

Supported in the interior of the outer housing 2 is an elongate inner housing 5 extending parallel to the axis of the outer housing 2. This inner housing 5 is provided at its closed end with a hydrogen gas jet nozzle 6 for supplying hydrogen gas 7 thereto. Formed at the peripheral surface of the inner housing 5 are a multiplicity of circumferentially equi-spaced apertures 8 (see Figure 2) through which the compressed air is introduced into the interior of the inner housing 5. In addition, a multiplicity of deflector guide fins 9 (see Figure 3) project radially inwardly from the inner peripheral surface of the inner housing 5 in close proximity of the corresponding apertures 8 so as to admit the compressed air in a spiral fashion into the interior of the inner housing 5.

A semi-spherical member 10 is coaxially supported in the inner housing 5 so as to define therewithin a combustion zone 11 upstream thereof and a mixing zone 12 downstream of the combustion zone 11 as shown in Figure 1. A water spray jet nozzle 13 is fixedly mounted to the apex of the semi-spherical member 10 to jet water sprays 14 into the mixing zone 12. In addition, circumferentially equi-spaced apertures 15 are formed at the peripheral surface of the semi-spherical member 10 and a multiplicity of deflector guide fins 16 project radially inwardly from the inner peripheral surface of the semi-spherical member 10 in close proximity of the corresponding apertures 15.

At least one ignition plug 17 is disposed at the peripheral wall of the inner housing 5 to ignite the hydrogen gas 7 jetted into the combustion zone 11.

In operation, air is supplied to the air compressor 3 for compressing purposes. The compressed air from the air compressor 3 is first introduced through the inlet port 4 into the interior of the outer housing 2 in such a direction as shown by the arrows in Figure 1 and is, then, introduced into the combustion zone 11 through the apertures 8 of the inner housing 5. At this time, the compressed air flows in a spiral fashion into the combustion zone 11 under the influence of the deflected guide fins 9 thereby to form a low pressure zone substantially at the central portion of the combustion zone 11.

Under these conditions, the hydrogen gas 7 and the water sprays 14 are substantially simultaneously jetted respectively into the combustion zone 11 and the mixing zone 12 by the hydrogen gas jet nozzle 6 and the water spray jet nozzle 13. After ignition of the ignition plug 17, the hydrogen gas 7 is continuously combusted therein, thereby generating the combustion energy. It will now be appreciated that under the influence of the above-mentioned low pressure zone centrally formed in the combustion zone 11, the hydrogen gas 7 jetted therein is well diffused in the combustion zone 11 and such combustion of the hydrogen gas 7 is thus effectively carried out therein, thereby increasing the combustion area of the hydrogen gas 1.

The combustion gas thus generated in the combustion zone 11 is then introduced through the apertures 15 into the mixing zone 12. Hereby, the water sprays 14 sprayed thereinto by the water spray jet nozzle 13 are instantly vaporized to steam for the generation of steam energy. It will also be appreciated that the combustion gas is admitted through the apertures 15 of the semi-spherical member 10 into the mixing zone 12 in a spiral fashion under the influence of the deflector guide fins 16 and thus, the water sprays 14 are well diffused in the mixing zone 12, thereby increasing the generation area of the steam energy.

The combustion gas of hydrogen gas generating in the combustion zone 11 has a larger static pressure and a higher combustion rate compared to gasoline. Therefore it cannot be used as an efficient mechanical energy as a high dynamic pressure, but it can instantly vaporize the water sprays which are jetted and dispersed in the mixing zone by the rapid combustion rate accompanying generation of this high thermal energy to obtain a steam energy of an extremely high pressure. Therefore, the combination of the combustion energy of hydrogen gas and the high pressure steam energy accompanying the vaporization of said water sprays can be combined to obtain mechanical dynamic energy. It will be noted that the combustion gas is next supplied through an outlet port 18 into an output turbine 19 in such a direction as shown by the arrows in Figure 1.

**Claim**

A gas turbine engine comprising an air compressor (3), an outer housing having at one end an inlet port (4) connected to the air compressor (3) and at the other end thereof, an outlet port (18), an inner housing (5) which is supported within and extends generally axially of the outer housing (2), and which has a closed upstream end facing said inlet port (4) and an open downstream end for discharging gaseous products, a multiplicity of circumferentially equi-spaced aperatures (8) in the wall of the inner housing (5) for admitting compressed air into the interior of the inner housing (5), a fuel nozzle (6) fixedly mounted on the inner housing to jet fuel (7) into the interior of the inner housing (5), and a water spray jet nozzle (13) for introducing water sprays (14) into the interior of the inner housing (5), characterized in that the gas turbine engine is hydrogen fueled; and includes at least one ignition plug (17) for igniting the hydrogen gas, a semi-spherical member (10) coaxially supported in the inner housing (5) so as to define therebetween a combustion chamber (11) upstream of the semi-spherical member (10) and a mixing zone (12) downstream of the semi-spherical member (10), said semi-spherical member (10) being provided with a multiplicity of circumferentially equi-spaced apertures (15), a water spray jet nozzle (13) fixedly mounted at the apex of the semi-spherical member (10) to introduce water sprays (14) into said mixing zone (12) to be instantly vaporized to steam by the ignited hydrogen gas, a multiplicity of deflector guide fins (9) projecting radially inwardly of the inner peripheral surface of the inner housing (5) in close proximity to the corresponding apertures (8) and adapted to direct the compressed air flows passing, in use, through said apertures (8) in a spiral fashion into the combustion zone (11) thereby to form a low pressure zone substantially at the central portion thereof, and a multiplicity of deflector guide fins (16) projecting radially inwardly from the inner peripheral surface of the semi-spherical member (10) in close proximity to the corresponding apertures (15) and adapted to divert the flows of the combustion gas produced by combustion of the hydrogen gas (7), passing, in use, through said apertures (15) in a spiral fashion into the mixing zone (12) thereby to diffuse efficiently the water sprays (14) introduced into the mixing zone (12), whereby the combustion energy of the ignited hydrogen gas (7) and the energy of the steam produced by vaporization of the water sprays (14) can be utilized in combination to obtain mechanical dynamic energy.

**Patentanspruch**

Gasturbine mit einem Luftkompressor (3), einem über eine Einlaßöffnung (4) mit dem Luftkompressor (3) verbundenen äußeren Gehäuse (2), welche am anderen Ende eine Auslaßöffnung (18) aufweist, sowie einem sich in axialer Richtung des äußeren Gehäuses (2) erstreckenden und darin angeordneten inneren Gehäuse (5), welches auf der Stromaufwärtsseite gegenüberliegend zu der Einlaßöffnung (4) ein geschlossenes Ende besitzt, während auf der stromabwärtigen Seite ein geöffnetes Ende vorgesehen ist, durch welches eine Abgabe der gasförmigen Produkte erfolgt, wobei innerhalb der Wandung des inneren Gehäuses (5) eine Mehrzahl von umfangsmäßig gleichmäßig verteilter Öffnungen (8) vorgesehen sind, durch welche Druckluft in das Innere des inneren Gehäuses (5) geleitet ist, wobei fernerhin an dem inneren Gehäuse eine Brennstoffdüse (6) befestigt ist, durch welche Brennstoff (7) in das Innere des inneren Gehäuses (5) geleitet ist, und wobei zusätzlich eine Wasserstrahldüse (13) vorgesehen ist, durch welche Wasserstrahlen (14) in das Innere des inneren Gehäuses (5) geleitet werden, dadurch gekennzeichnet, daß die mit Wasserstoff betriebene Gasturbine (1) wenigstens eine Zündkerze (17) zur Zündung des Wasserstoffgases aufweist, und daß im Inneren des inneren Gehäuses (5) ein halbkugelförmiges Element (10) koaxial angeordnet ist, wodurch auf der stromaufwärtigen Seite des halbkugelförmigen Elementes (10) eine Brennkammer (11) gebildet ist, während auf der stromabwärtigen Seite des halbkugelförmigen Elementes (10) eine Mischzone (12) gebildet ist, wobei das halbkugelförmige Element (10) mit einer Mehrzahl von umfangsmäßig in gleichen Abständen angeordneten Öffnungen (15) versehen ist, ferner daß an dem Apex des halbkugelförmigen Elementes (10) eine Wasserstrahldüse (15) befestigt ist, durch welche die Wasserstrahlen 14 in die Mischzone (12) geleitet werden, so daß dieselben mit Hilfe des gezündeten Wasserstoffgases augenblicklich in Dampf umgewandelt werden, ferner daß von der inneren peripheren Oberfläche des inneren Gehäuses (5) in unmittelbarer Nähe der entsprechenden Öffnungen (8) eine Mehrzahl von Ablenkblechen (8) sich radial nach innen erstrecken und dabei die durch die Öffnungen (8) einströmende komprimierte Luft in spiralförmiger Weise in die Brennzone (11) einleiten, so daß in deren mittleren Bereich ein Niederdruckgebiet gebildet ist, während von der inneren peripheren Oberfläche des halbkugelförmigen Elementes (10) in unmittelbarer Nähe der entsprechenden Öffnungen (15) eine Mehrzahl von Ablenkblechen (16) vorgesehen sind, welche sich radial nach einwärts erstrecken und dabei die durch die Verbrennung des Wasserstoffgases (7) erzeugten Verbrennungsgase beim Durchströmen durch die Öffunungen (15) in spiralförmiger Weise in die Mischzone (12) einleiten, so daß auf diese Weise eine wirksame Verteilung der in die Mischzone (12) eingeführten Wasserstrahlen (14) zustande kommt, demzufolge die Verbrennungsenergie des gezündeten Wasserstoffgases (7) und die durch Verdampfung der Wasserstrahlen (14) erzeugte Dampfenergie in Kombination zur Erzielung der gewünschten mechanischen dynamischen Energie verwendet werden können.

**Revendication**

Turbine à gaz comprenant un compresseur à air (3), un bâti extérieur ayant à une extrémité un orifice d'entrée (4) relié au compresseur d'air (3) et à son autre extrémité, un orifice de sortie (18), un bâti intérieur (5) qui est monté à l'intérieur du bâti extérieur (2) et qui s'étend globalement coaxialement par rapport à celui-ci, et qui comporte une extrémité amont fermée en face dudit orifice d'entrée (4) et une extrémité aval ouverte pour l'évacuation de produits gazeux, un certain nombre d'orifices circonférentiellement équidistants (8) dans la paroi du bâti intérieur (5) pour admettre de l'air comprimé à l'intérieur du bâti intérieur (5), une buse d'injection de combustible (6) montée rigidement sur le bâti intérieur pour injecter un combustible (7) à l'intérieur du bâti intérieur (5), et une buse d'injection de pulvérisations d'eau (13) pour introduire des pulvérisations d'eau (14) à l'intérieur du bâti intérieur (5), caractérisée en ce qu'elle utilise de l'hydrogène comme combustible; et en ce qu'elle comporte au moins une bougie d'allumage (17) pour allumer l'hydrogène, un organe hémisphérique (10) monté coaxialement dans le bâti intérieur (5) de façon à définir entre eux, une chambre de combustion (11) en amont de l'organe hémisphérique (10) et une zone de mélange (12) en aval de l'organe hémisphérique (10), ledit organe hémisphérique (10) étant muni d'un certain nombre d'orifices circonférentiellement équidistants (15), d'une buse d'injection de pulvérisations d'eau (13) montée rigidement au sommet de l'organe hémisphérique (10) pour introduire des pulvérisations d'eau (14) dans ladite zone de mélange (12) de façon à ce qu'elles soient instantanément vaporisées en vapeur d'eau par l'hydrogène en combustion, un certain nombre de nervures de guidage et de déflexion (9) faisant saillie radialement vers l'intérieur de la surface périphérique intérieure du bâti intérieur (5) au voisinage immédiat des orifices correspondants (8) et adaptées à diriger les écoulements d'air comprimé passant, en situation de fonctionnement, par lesdits orifices (8) selon une spirale pour pénétrer dans la zone de combustion (11), afin de former une zone à basse pression pratiquement dans sa partie centrale, et un certain nombre de nervures de guidage et de déflexion (16) faisant saillie radialement vers l'intérieur de la surface périphérique intérieure de l'organe hémisphérique (10) au voisinage immédiat des orifices correspondants (15) et adaptées à dévier les écoulements du gaz de combustion produits par la combustion de l'hydrogène (7) en les faisant passer, en situation de fonctionnement, par lesdits orifices (15) selon une spirale pour les faire pénétrer dans la zone de mélange (12) afin de diffuser efficacement les pulvérisations d'eau (14) introduites dans la zone de mélange (12), de façon à ce que l'énergie de combustion de l'hydrogène allumée (7), et que l'énergie de la vapeur d'eau produite par vaporisation des pulvérisations d'eau (14) puissent être utilisées en combinaison pour produire une énergie mécanique dynamique.

FIG. I

# FIG.2

# FIG.3